# EUROPÄISCHE PATENTANMELDUNG

(11) **EP 2 402 921 A1**
(43) Veröffentlichungstag der Anmeldung: **04.01.2012**
(21) Anmeldenummer: 10006703.2
(22) Anmeldetag: 29.06.2010
(51) Int. Cl.: G08C 17/00, F16C 41/00

(54) **Baureihe von Getriebebauteilen**

(71) Anmelder: Winergy AG, 46562 Voerde (DE)
(72) Erfinder: Dinter, Martin Ralf, Dr., 45888 Gelsenkirchen (DE)
(74) Vertreter: Michau, Sascha

(57) **Zusammenfassung**

Eine Baureihe von Getriebebauteilen umfaßt ein in sämtlichen Getriebebauteiletypen der Baureihe verwendetes Basismodul, das einen speisenden Primärteil als Sendeeinheit und einen Sekundarteil als Empfangseinheit. Sendeeinheit und Empfangseinheit sind durch zumindest einen Luftspalt voneinander getrennt, jeweils in einem im wesentlichen ring- oder scheibenförmigen Träger fixiert und induktiv, kapazitiv, optisch oder funkgebunden miteinander gekoppelt. Getriebebauteiletypen sind jeweils durch eine typindividuelle Anzahl in Umfangsrichtung an den Trägern verteilt angeordneter Basismodule gekennzeichnet. Außerdem sind Getriebebauteiletypen jeweils durch eine typindividuelle Anzahl radial zueinander versetzt angeordneter Reihen von Basismodulen gekennzeichnet. Darüber hinaus sind Getriebebauteiletypen jeweils durch eine typindividuelle Anzahl axial zueinander versetzt angeordneter Reihen von Basismodulen gekennzeichnet.

## Beschreibung

Getrieben für industrielle Anwendungen oder Windkraftanlagen, insbesondere Planetengetrieben, kommt in industriellen Verarbeitungs- und Fertigungsprozessen vielfach eine zentrale Bedeutung zu. An Industrie- oder Windkraftanlagengetriebe wird eine breite Palette von komplexen Anforderungen gestellt. Beispielsweise ist eine dieser Anforderungen eine zuverlässige Funktion, die über eine lange Nutzungsdauer bei minimalem Wartungsaufwand zu gewährleisten ist. Industrielle Verarbeitungs- und Fertigungsprozesse oder Energieerzeugungsprozesse beeinträchtigende Anlagenausfälle können teuer werden, beispielsweise aufgrund kostspieliger Stillstandszeiten. Zur Überwachung und Sicherstellung einer zuverlässigen Funktion sind in Getrieben mitunter zahlreiche Sensoren oder Aktoren an rotierenden Bauteilen installiert, die entsprechend herkömmlichen Lösungen über Schleifringverbindungen mit Energie versorgt oder mit Datenleitungen verbunden werden.

Beispielsweise ist für einen Betrieb von Pitch-Antriebs- und -Regelungssystemen elektrische Energie erforderlich, die bei konventionellen Windenergieanlagen über Schleifringe von der Gondel zu in der Rotornabe angeordneten elektrischen Verbrauchern übertragen wird. Über die Schleifringe werden vielfach auch Status- und Steuerungssignale für die Pitch-Antriebs- bzw. -Regelungssysteme übertragen. Schleifringe unterliegen mechanischem Verschleiß und stellen eine nicht unerhebliche potentielle Störungsquelle in einer Windenergieanlage dar.

Aus DE 10 2004 051 170 A1 ist ein Computertomographiegerät mit einem rotierenden Teil mit einer Röntgenröhre und einem Detektor zum Detektieren der transmittierten Röntgenstrahlung bekannt. Ein stationärer Teil des Computertomographiegeräts ist mit einer Datenverarbeitungseinrichtung zum Auswerten der detektierten Meßergebnisse verbunden. Zur Spannungsversorgung der Röntgenröhre und des Detektors ist ein Übertrager vorgesehen, der eine kontaktlose elektrische Leistungsübertragung zwischen dem stationären und dem rotierenden Teil ermöglicht. Der Übertrager ist zusätzlich zur kontaktlosen elektrischen Leistungsübertragung für eine kontaktlose Datenübertragung zwischen dem stationären und dem rotierenden Teil ausgelegt.

In DE 10 2006 021 608 A1 ist eine Vorrichtung zur Datenübertragung zwischen zwei unter Einhaltung eines geringen Abstandes relativ zueinander bewegten Teilen beschrieben. Die Vorrichtung umfaßt eine Sendeeinrichtung mit zumindest einer mit einem Sender verbundenen Sendeantenne und eine Empfangseinrichtung mit einer mit einem Empfänger verbundenen Empfangsantenne. Die Sendeantenne und die Empfangsantenne sind als Hochfrequenzleitung ausgebildet und so angeordnet, daß während zumindest eines Abschnitts der Relativbewegung in die Sendeantenne eingespeiste Signale durch kapazitive oder induktive Kopplung von der Empfangsantenne empfangen werden. Zwischen dem Sender und dem Empfänger sind ein oder mehrere Kompensationseinrichtungen angeordnet, die einer durch Übermittlung der Signale auf der Hochfrequenzleitung hervorgerufenen Signalverzerrung entgegenwirken.

Aus WO 2005031770 A1 ist ein induktiver Drehübertrager bekannt, der aus einem feststehenden Teil und einem rotierenden Teil besteht, wobei der rotierende Teil und der feststehende Teil eine gemeinsame virtuelle Drehachse aufweisen. Der rotierende Teil dreht sich dabei um den feststehenden Teil. Die Datenübertragung erfolgt über wenigstens eine Datenübertragungsstrecke mittels wenigstens eines induktiven Elements. Die Datenübertragungsstrecke ist außerhalb der Drehachse des Drehübertragers angeordnet.

In WO 2007/012568 A2 ist eine Vorrichtung zur Datenübertragung zwischen zwei relativ zueinander bewegten Komponenten, von denen eine erste Komponente mehrere entlang einer Bewegungsrichtung angeordnete Sendesegmente und eine zweite Komponente mehrere entlang der Bewegungsrichtung angeordnete Empfangseinheiten aufweist. Die Daten werden zur parallelen Übertragung auf mehrere Sendesegmente aufgeteilt. Die Daten werden in Datenpaketen übertragen werden, die neben einem Datenanteil zumindest eine Paket-ID umfassen, anhand der die Datenanteile der Datenpakete in einer mit den Empfangseinheiten verbundenen Empfangseinrichtung in der korrekten Reihenfolge zusammengesetzt werden.

Der vorliegenden Erfindung liegt die Aufgabe zugrunde, ein Baukastensystem von Getriebebauteilen zur Energie- bzw. Datenübertragung zwischen relativ zueinander rotierenden Getriebeteilen zu schaffen, das eine kostengünstige und einfache Realisierung unterschiedlicher Leistungsklassen ermöglicht.

Diese Aufgabe wird erfindungsgemäß durch eine Baureihe mit den in Anspruch 1 angegebenen Merkmalen gelöst. Vorteilhafte Weiterbildungen der vorliegenden Erfindung sind in den abhängigen Ansprüchen angegeben.

Die erfindungsgemäße Baureihe von Getriebebauteilen umfaßt ein in sämtlichen Getriebebauteiletypen der Baureihe verwendetes Basismodul, das einen speisenden Primärteil als Sendeeinheit und einen Sekundarteil als Empfangseinheit. Sendeeinheit und Empfangseinheit sind durch zumindest einen Luftspalt voneinander getrennt, jeweils in einem im wesentlichen ring-oder scheibenförmigen Träger fixiert und induktiv, kapazitiv, optisch oder funkgebunden miteinander gekoppelt. Die Träger sind dabei um eine Getriebewelle anordenbar. Getriebeteile sind beispielsweise in einem Getriebe angeordnete Maschinenelemente oder mit einem Getriebe verbundene Maschinenelemente, insbesondere mit einer An- oder Abtriebswelle verbundene Bauteile. Zwischen zwei Trägern ist ein Wälz- oder Gleitlager angeordnet. Getriebebauteiletypen sind jeweils durch eine typindividuelle Anzahl in Umfangsrichtung an den Trägern verteilt angeordneter Basismodule gekennzeichnet. Außerdem sind Getriebebauteiletypen jeweils durch eine typindividuelle Anzahl radial zueinander versetzt angeordneter Reihen von Basismodulen gekennzeichnet. Darüber hinaus sind Getriebebauteiletypen jeweils durch eine typindividuelle Anzahl axial zueinander versetzt angeordneter Reihen von Basismodulen gekennzeichnet. Insgesamt ermöglicht die erfindungsgemäße Baureihe eine reduzierte Teilezahl zur Realisierung einer Vielzahl leistungsmäßig ausdifferenzierter Bauteile zur Energie- bzw. Datenübertragung.

Die vorliegende Erfindung wird nachfolgend an einem Ausführungsbeispiel anhand der Zeichnung näher erläutert. Es zeigt
- Figur 1: eine schematische Darstellung einer Windkraftanlage mit mehreren möglichen Einbaupositionen für Drehübertrager,
- Figur 2: eine Schnittdarstellung eines ersten Getriebebauteiltyps einer Baureihe von Getriebebauteilen zur Energie- und Datenübertragung zwischen relativ zueinander rotierenden Getriebeteilen,
- Figur 3: eine perspektivische Darstellung des ersten Getriebebauteiltyps,
- Figur 4: eine Schnittdarstellung eines zweiten Getriebebauteiltyps der Baureihe,
- Figur 5: eine perspektivische Darstellung des zweiten Getriebebauteiltyps,
- Figur 6: eine perspektivische Darstellung des zweiten Getriebebauteiltyps mit einem demontiertem Träger.

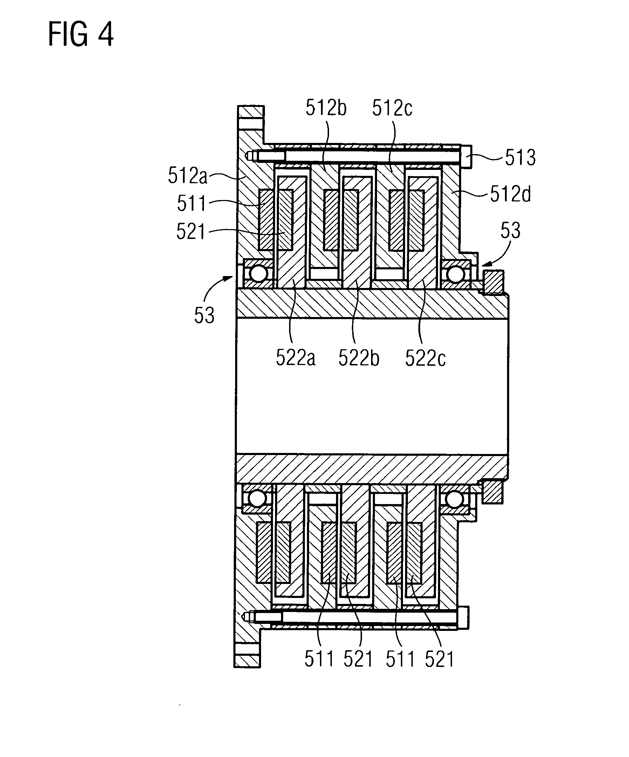

- Figur 4: eine Schnittdarstellung eines dritten Getriebebauteiltyps der Baureihe,

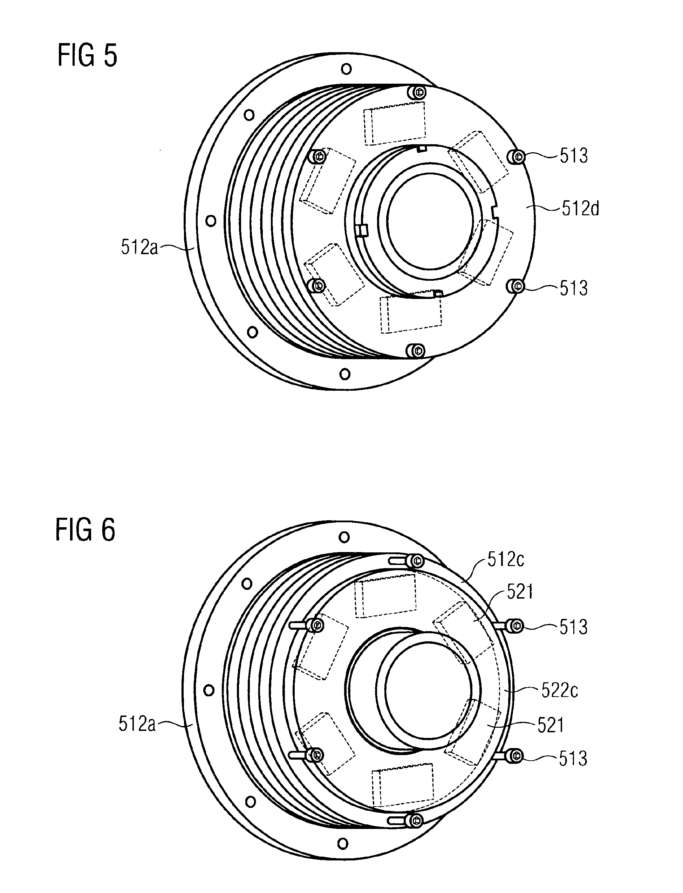

- Figur 5: eine perspektivische Darstellung des zweiten Getriebebauteiltyps,

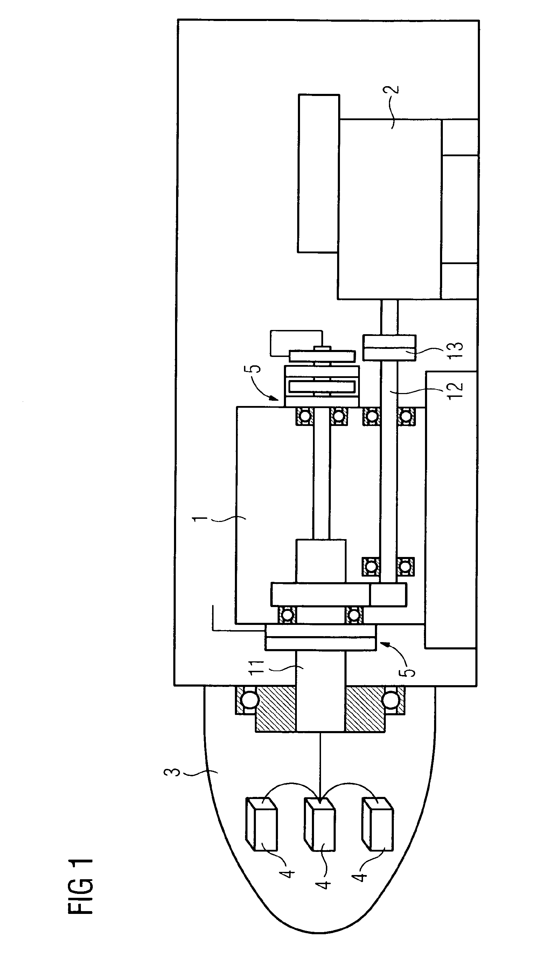

In Figur 1 ist eine Gondel einer Windkraftanlage dargestellt, in der ein Getriebe 1 und ein Generator 2 montiert sind. Das Getriebe 1 ist über eine Antriebswelle 11 mit einer Rotornabe 4 verbunden, in der mehrere Pitch-Antriebssysteme 4 zur Rotorblattverstellung angeordnet sind. Außerdem ist das Getriebe 1 über eine Abtriebswelle 12 und eine Kupplung 13 mit dem Generator 2 verbunden. Zur Energie- und Datenübertragung zwischen relativ zueinander rotierenden Getriebeteilen können beispielsweise an der Antriebswelle 11, an einer beliebigen Getriebewelle, an der Abtriebswelle 12 oder am Generator 2 konventionelle Schleifringe ersetzende Drehübertrager 5 vorgesehen sein.

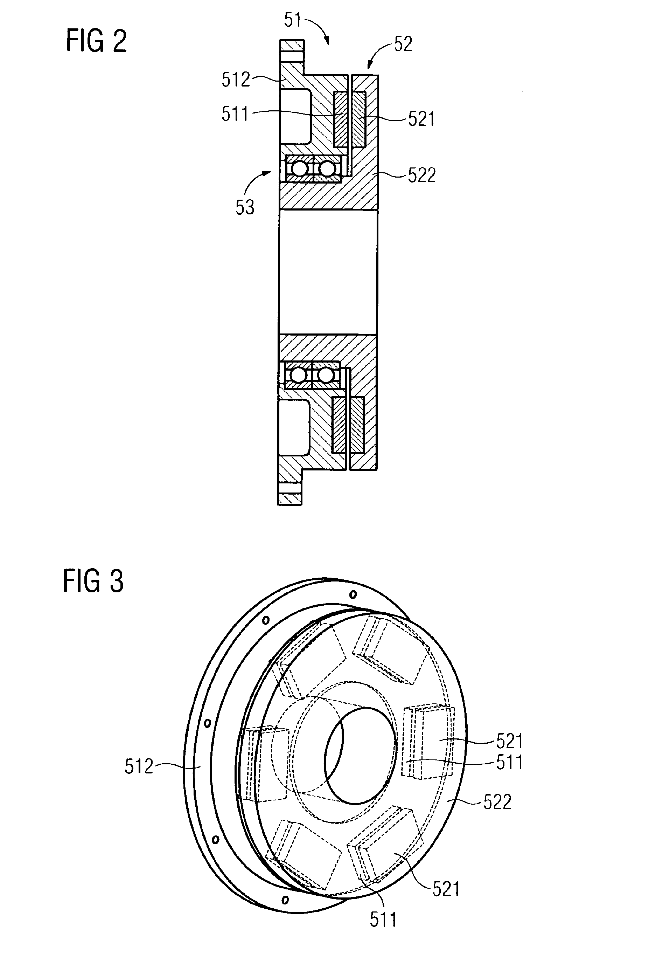

Der in den Figuren 2 und 3 dargestellte erste Getriebebauteiltyp einer Baureihe von Getriebebauteilen zur Energie- und Datenübertragung zwischen relativ zueinander rotierenden Getriebeteilen weist mehrere in sämtlichen Getriebebauteiletypen der Baureihe verwendete Basismodule auf. Die Basismodule umfassen jeweils einen speisenden Primärteil 511 als Sendeeinheit und einen Sekundarteil 521 als Empfangseinheit, die durch einen Luftspalt voneinander getrennt sind. Primärteile 511 und Sekundärteile 521 können auch jeweils als kombinierte Sende-/Empfangseinheiten ausgestaltet sein, so daß eine bidirektionale Übertragung möglich ist. Die Primärteile 511 und Sekundärteile 521 sind jeweils in einem im wesentlichen ringförmigen Träger 512, 522 fixiert und können induktiv, kapazitiv, optisch oder funkgebunden miteinander gekoppelt sein. Die Träger 512 und 522 können somit einfach um eine Getriebewelle angeordnet werden. Zwischen den Trägern 512, 522 ist ein Wälz- oder Gleitlager angeordnet.

Im Luftspalt kann beispielsweise zusätzlich ein elektrisch, magnetisch oder optisch leitendes Medium vorgesehen sein, an das die jeweilige Sende- und Empfangseinheit berührungslos angekoppelt sind. Das Medium kann beispielsweise eine Hochfrequenz-Streifenleitung oder ein optisches Leiterelement sein. Entsprechend einer bevorzugten Ausführungsvariante der vorliegenden Erfindung weisen sämtliche Getriebebauteiletypen für mehrere Getriebebauteiletypen wiederverwendbare Träger mit derselben Anzahl bestückbarer Aufnahmen für Sende- oder Empfangseinheiten auf. Auf diese Weise kann die gewünschte übertragbare Leistung bzw. Datenrate beliebig skaliert werden. Des weiteren weisen sämtliche Träger zumindest zwei sich radial erstreckende Trennfugen auf. Durch die Trennfugen sind die Träger derart in jeweils zumindest zwei Segmente unterteilt, beispielsweise Hälften, daß die Träger radial von einer Getriebewelle demontierbar sind, ohne daß diese ausgebaut werden muß.

Bei dem in den Figuren 4 bis 6 dargestellten zweiten Getriebebauteiltyp weisen die Basismodule eine axiale Reihenanordnung auf. Dabei sind 4 primärseitige Trägerelemente 512a-512d und 3 sekundärseitige Trägerelemente 522a-522c parallel zueinander angeordnet. Die primärseitigen und sekundärseitigen Trägerelemente sind dabei untereinander drehfest miteinander verbunden. Beispielsweise sind die primärseitigen Trägerelemente 512a-512d durch mehrere Schrauben 513 drehfest miteinander verbunden, wobei die Schrauben 513 radial außerhalb der sekundärseitigen Trägerelemente 522a-522c angeordnet sind. Die sekundärseitigen Trägerelemente 522a-522c können beispielsweise drehfest um eine gemeinsame Hohlwelle angeordnet und mit dieser verbunden sein. Darüber hinaus weisen die sekundärseitigen Trägerelemente 522a-522c die gleiche Ausführung auf. Von den primärseitigen Trägerelementen sind die beiden inneren Trägerelemente 512b-512c identisch ausgeführt.

Die Basismodule des in den Figuren 4 bis 6 dargestellten zweiten Getriebebauteiltyps können elektrisch parallel zueinander angeschlossen sein. Eine besonders stark reduzierte Teileanzahl ergibt sich, wenn für sämtliche Primärteile 511 und Sekundärteile 521 der Basismodule die gleiche Sende-/Empfangseinheit verwendet wird.

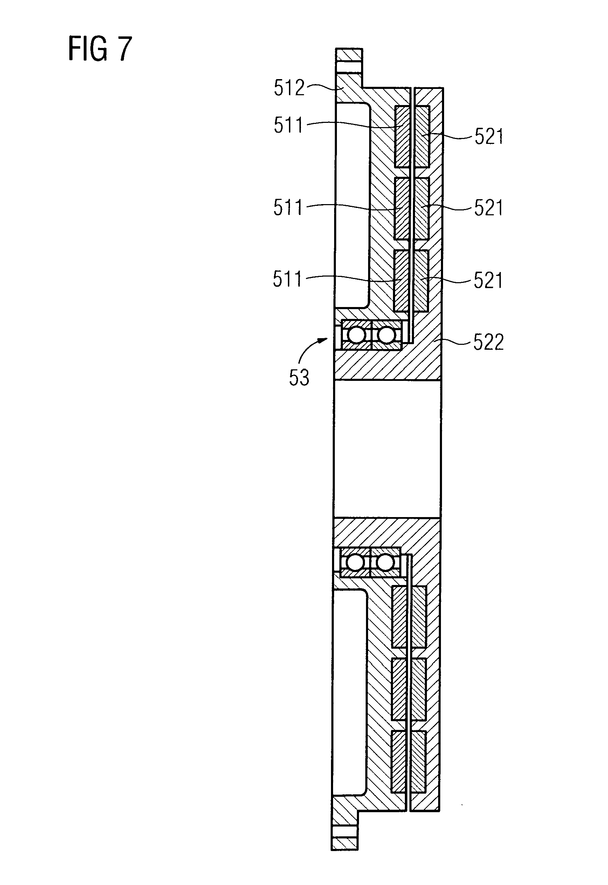

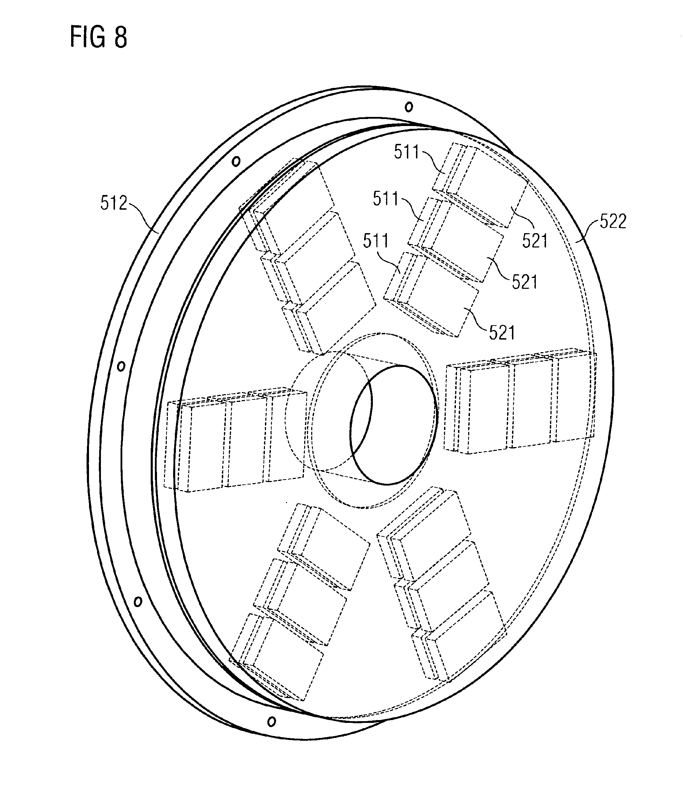

Bei dem in den Figuren 7 und 8 dargestellten dritten Getriebebauteiltyp weisen die in den Trägern 512, 522 angeordneten Primärteile 511 und Sekundärteile 521 der Basismodule eine radiale Reihenanordnung. Auch bei diesem Getriebebauteiltyp ist zwischen den Trägern 512, 522 ein Wälz- oder Gleitlager angeordnet. Für eine radiale Reihenanordnung induktiv gekoppelter Basismodule kann beispielsweise eine Mehrzahl nach Radius gestaffelter im wesentlichen ringförmiger induktiver Drehübertrager vorgesehen sein, wobei die Drehübertrager insbesondere bei zusätzlicher axialer Reihenanordnung jeweils für weitere Getriebebauteiltypen wiederverwertet werden können.

Innerhalb der Baureihe sind die Getriebebauteiletypen jeweils durch eine typindividuelle Anzahl in Umfangsrichtung an den Trägern verteilt angeordneter Basismodule gekennzeichnet. Zusätzlich sind die Getriebebauteiletypen jeweils durch eine typindividuelle Anzahl radial zueinander versetzt angeordneter Reihen von Basismodulen gekennzeichnet. Darüber hinaus sind die Getriebebauteiletypen jeweils durch eine typindividuelle Anzahl axial zueinander versetzt angeordneter Reihen von Basismodulen gekennzeichnet sind.

Die Anwendung der vorliegenden Erfindung ist nicht auf die hier beschriebenen Ausführungsbeispiele beschränkt.

## Patentansprüche

1. Baureihe von Getriebebauteilen zur Energie- und/oder Datenübertragung zwischen relativ zueinander rotierenden Getriebeteilen mit
- einem in sämtlichen Getriebebauteiletypen der Baureihe verwendeten Basismodul, das einen speisenden Primärteil als Sendeeinheit und einen Sekundarteil als Empfangseinheit umfaßt, die durch zumindest einen Luftspalt voneinander getrennt, jeweils in einem im wesentlichen ring-oder scheibenförmigen Träger fixiert und induktiv, kapazitiv, optisch oder funkgebunden miteinander gekoppelt sind, wobei die Träger um eine Getriebewelle anordenbar sind,
- einem zwischen zwei Trägern angeordneten Wälz- oder Gleitlager,
- wobei Getriebebauteiletypen jeweils durch eine typindividuelle Anzahl in Umfangsrichtung an den Trägern verteilt angeordneter Basismodule gekennzeichnet sind,
- wobei Getriebebauteiletypen jeweils durch eine typindividuelle Anzahl radial zueinander versetzt angeordneter Reihen von Basismodulen gekennzeichnet sind,
- wobei Getriebebauteiletypen jeweils durch eine typindividuelle Anzahl axial zueinander versetzt angeordneter Reihen von Basismodulen gekennzeichnet sind.

2. Baureihe nach Anspruch 1,
bei der sämtliche Getriebebauteiletypen Träger mit derselben Anzahl bestückbarer Aufnahmen für Sende- oder Empfangseinheiten aufweisen.

3. Baureihe nach einem der Ansprüche 1 oder 2,
bei der bei zumindest einem Getriebebauteiletyp sämtliche Träger zumindest zwei sich radial erstreckende Trennfugen aufweisen.

4. Baureihe nach Anspruch 3,
bei der die Träger durch die Trennfugen derart in jeweils zumindest zwei Segmente unterteilt sind, daß die Träger radial von einer Getriebewelle demontierbar sind.

5. Baureihe nach einem der Ansprüche 1 bis 4,
bei der bei einer axialer Reihenanordnung der Basismodule mindestens 2*N Träger parallel zueinander angeordnet sind, wobei jeweils mindestens N primärseitige und sekundärseitige Träger drehfest miteinander verbunden sind.

6. Baureihe nach Anspruch 5,
bei der die Basismodule parallel zueinander angeordneter Träger elektrisch parallel zueinander angeschlossen sind.

7. Baureihe nach einem der Ansprüche 5 oder 6,
bei der die gleichen Träger für die axiale Reihenanordnung der Basismodule vorgesehen sind.

8. Baureihe nach einem der Ansprüche 1 bis 7,
bei der im Luftspalt jeweils ein elektrisch, magnetisch oder optisch leitendes Medium vorgesehen ist, an das die jeweilige Sende- und Empfangseinheit berührungslos angekoppelt sind.

9. Baureihe nach Anspruch 8,
bei der das Medium eine Hochfrequenz-Streifenleitung oder ein optisches Leiterelement ist.

10. Baureihe nach einem der Ansprüche 1 bis 9,
bei der für eine radiale Reihenanordnung der Basismodule eine Mehrzahl nach Radius gestaffelter im wesentlichen ringförmiger induktiver Drehübertrager vorgesehen sind.
